(19) **Europäisches Patentamt / European Patent Office / Office européen des brevets**

(11) **EP 3 646 602 B1**

(12) **EUROPEAN PATENT SPECIFICATION**

(45) Date of publication and mention
of the grant of the patent:
**22.04.2026  Bulletin 2026/17**

(21) Application number: **17761933.5**

(22) Date of filing: **05.07.2017**

(51) International Patent Classification (IPC):
*H04N 19/597* (2014.01)   *G06T 7/00* (2017.01)
*H04N 19/593* (2014.01)   *H04N 19/527* (2014.01)
*H04N 19/573* (2014.01)

(52) Cooperative Patent Classification (CPC):
**H04N 19/593; G06T 3/00; H04N 19/527;
H04N 19/573; H04N 19/597; H04N 21/816**

(86) International application number:
**PCT/RU2017/000489**

(87) International publication number:
**WO 2019/009750 (10.01.2019 Gazette 2019/02)**

(54) **APPARATUS AND METHOD FOR CODING PANORAMIC VIDEO**

VORRICHTUNG UND VERFAHREN ZUR CODIERUNG VON PANORAMAVIDEOS

APPAREIL ET PROCÉDÉ DE CODAGE DE VIDÉO PANORAMIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**06.05.2020  Bulletin 2020/19**

(73) Proprietor: **HUAWEI TECHNOLOGIES CO., LTD.
Shenzhen, Guangdong 518129 (CN)**

(72) Inventors:
• **SYCHEV, Maxim Borisovitch
  Shenzhen
  Guangdong 518129 (CN)**
• **DECURNINGE, Alexis
  Shenzhen
  Guangdong 518129 (CN)**
• **TSILIMANTOS, Dimitrios
  Shenzhen
  Guangdong 518129 (CN)**

• **KARABUTOV, Alexander Alexandrovich
  Shenzhen
  Guangdong 518129 (CN)**
• **IKONIN, Sergey Yurievich
  Shenzhen
  Guangdong 518129 (CN)**
• **VALENTIN, Stefan
  Shenzhen
  Guangdong 518129 (CN)**
• **XIE, Qingpeng
  Shenzhen
  Guangdong 518129 (CN)**

(74) Representative: **Pfenning, Meinig & Partner mbB
Patent- und Rechtsanwälte
Theresienhöhe 11a
80339 München (DE)**

(56) References cited:
  **WO-A1-2016/064862      US-A1- 2016 112 489
  US-A1- 2016 142 697      US-A1- 2017 118 475**

**Description**

FIELD

The present disclosure relates to the field of video stream processing. Particularly, the disclosure relates to improving inter frame prediction of panoramic video decoding, by using motion compensation.

BACKGROUND

Motion compensation is a widely used approach in conventional video coding. The purpose of the motion compensation is to take intentional and unintentional camera movements into account for providing a better compression result and image quality. These camera movements are not limited to only changing the location of the camera device but include also zooming, rotating, tilting, changing the perspective and similar motion that cause the image captured by the imaging sensor to change the place.

Global motion compensation, which is a common approach, is an effective solution for improving video-coding efficiency and for other video processing applications. It allows to model camera motion with a small set of parameters. which usually applied to background of the frame.

Known solutions include simple two-dimensional models, for example, translational motion, rotation, scaling, scaling-translation, rotation-translation, scaling-rotation, warping and parabolic. These models typically include the signaling of two-dimensional parameters in a form of a set of two-dimensional vectors for compensating the movements.

The recent developments in three-dimensional video, for example in games or other virtual reality applications, have made three-dimensional video applications popular. As a significant fraction of these videos may be captured with moving cameras, there is need for introducing motion correction methods for three-dimensional videos.

WO2016064862A1 discloses a method for encoding a spherical video. The method includes mapping a frame of the spherical video to a two dimensional representation based on a projection. Further, in a prediction process the method includes determine whether at least one block associated with a prediction scheme is on a boundary of the two dimensional representation, and upon determining the at least one block associated with the prediction scheme is on the boundary, select an adjacent end block as a block including at least one pixel for use during the prediction process, the adjacent end block being associated with two or more boundaries of the two dimensional representation.

US2017118475A1 discloses methods and apparatus of compression for non-stitched pictures captured by multiple cameras of a panoramic video capture device. According to one embodiment, the system uses a RIBC (Remapped Intra Block Copy) mode, where the block vector (BV) or BV predictor is remapped using calibration data to reduce the search range. The mapped BV or BVP is also more efficient for coding. A color scaling process can be used with the RIBC mode to compensate the color/brightness discrepancy between images from different cameras. A projection-based Inter prediction method is also disclosed. The projection-based Inter prediction method takes into account different perspectives between two images captured from different cameras. Transform matrix is applied to a block candidate to project the block candidate to a position of a target block. The projected block candidate is used as a predictor for the target block.

SUMMARY

An apparatus and method for providing motion compensation in decoding of a panoramic video. The panoramic video comprises a sequence of encoded image frames. Using inter frame prediction, an image frame of a video is expressed in terms of at least one other image frame, e.g., the preceding frame. In panoramic videos, image frames are mapped on a spherical viewing area. In the method, the motion caused by camera movements is compensated by computing a difference between a reference frame and a current frame. The computed difference is used when re-constructing the current frame. The current frame may in turn be placed in an image buffer and used as a reference frame for other frames. The invention is set out in the set of appended claims.

In an aspect, a video decoding apparatus comprising a processor is disclosed. The processor is configured to receive an encoded panoramic video representing a sequence of frames of a panoramic video, to determine a projection center for a reference frame of the panoramic video, to determine a projection center for a current frame of the panoramic video, wherein the determined projection centers are determined in a same coordinate system, to compute a difference between the determined projection centers of the reference frame and the current frame, and to re-construct the current frame using inter frame prediction using the computed difference. The coordinate system is a coordinate system of three-dimensional (3D) space. A projection center is the center of a sphere in three-dimensional, 3D, space on which the panoramic video is projected.

It is beneficial to use the video decoding apparatus according to the aspect in decoding a panoramic video as it improves the inter frame prediction when decoding a panoramic video. This is particularly beneficial as panoramic video is complex three-dimensional content, which can be obtained by stitching pictures from a set of cameras. The video decoding apparatus according to the aspect is capable to respond to the challenges caused by the different nature of the content. The motion model, after stitching, highly differs from the regular two-dimensional video content.

In an implementation of the aspect, the processor is further configured to transform the reference frame so that the projection center of the transformed reference frame corresponds (i.e. coincides at least approximately) with the projection center of the current frame based on the computed difference; and when re-constructing the current frame, the processor is further configured to re-construct the current frame using inter frame prediction based on the transformed reference frame. It is beneficial to transform the reference frame so that the projection center of the reference frame corresponds with the projection center of the current frame. Then it is possible to use the transformed reference frame in inter frame prediction of the video decoding apparatus. This leads into improved and more efficient decoding.

In an implementation of the aspect, the processor is further configured to insert the reconstructed frame into a decoded picture buffer with a specified index. It is beneficial to store the reconstructed frames in a decoded picture buffer with a specified index so that the reconstructed frame can later be used as reference frame and is easy to address.

In an implementation of the aspect, the processor is further configured to select at least one reference frame based on a reference frame index included in the encoded panoramic video. It is beneficial to choose the reference frame so that the most suitable reference frame may be used in decoding.

In an implementation of the aspect, the processor is further configured to select a part of the reference frame and to re-construct the current frame using the selected part and the computed difference. It is beneficial to select only a part of the reference frame as only it may not be necessary to decode and compensate motion in the complete frame but only in the part where the need occurs. This saves computing power as only a part of the frame needs to be processed. Furthermore, selecting only a part of a reference frame is particularly beneficial when it is possible to select the part from several different reference frames that have been selected from a set of reference frames.

In an implementation of the aspect the processor is further configured to perform projection of the reference frame so that the projection center of the reference frame corresponds with the projection center of the current frame when transforming the reference frame in order to correspond with the projection center of the current frame. This is particularly beneficial as it provides compensation for changes in camera location and other similar motion, such as zooming.

In an implementation of the aspect, the processor is further configured to rotate the reference frame around its projection center in order to transform the reference frame so that the rotated reference frame corresponds with the current frame. This is beneficial as it provides compensation for camera rotations, such as yaw, pitch and roll. Furthermore, it is possible and particularly beneficial to combine the rotational correction with shifting correction when both occur at the same time.

In an implementation of the aspect, the encoded panoramic video includes at least one of the following parameters: vector projection shift in three-dimensional space and orientation parameters (e.g, three orientation angles such as yaw, pitch, and roll). It is beneficial to provide the parameters in the video for supporting the motion compensation in panoramic video.

In an implementation of the aspect, the processor is further configured to generate an additional reference frame. It is beneficial to generate additional reference frames as the higher number of reference frames may improve the decoding result.

In an implementation of the aspect, the processor is configured to compensate for movement by using a global motion compensation method. It is beneficial to use the global motion compensation approach with the aspect as it is a generally known and widely used approach. Thus, the implementation is able to improve the inter frame prediction in already existing systems involving at least one decoder with small changes.

In an implementation of the aspect the processor is further configured to use one of the following: transformation using the projection center of the current frame as focal point, transformation using the projection center of the reference frame as a focal point; or transformation using a position between the projection centers of the reference frame and current frame as a focal point. It is beneficial to allow use of different projection centers or positions as a focal point as it increases the flexibility of the approach.

In another aspect a method for decoding video is disclosed. The method comprises receiving an encoded panoramic video representing a sequence of frames of a panoramic video; determining a projection center for a reference frame of the panoramic video; determining a projection center for a current frame of the panoramic video, wherein the determined projection centers are determined in a same coordinate system; computing the difference between determined projection centers of the reference frame and the current frame; and re-constructing the current frame using inter frame prediction using the computed difference. A projection center is the center of a sphere in three-dimensional, 3D, space on which the panoramic video is projected.

It is beneficial to use the video decoding method according to the aspect in decoding a panoramic video as it improves the inter frame prediction when decoding a panoramic video. This is particularly beneficial as panoramic video is complex three-dimensional content, which is obtained by stitching pictures from a set of cameras. The video decoding method according to the aspect is capable to respond to the challenges caused by the different nature of the content. The motion model, after stitching, highly differs from the regular two-dimensional video content.

In an implementation of the aspect the method further comprises:

transforming the reference frame so that the projection center of the transformed reference frame corresponds with the projection center of the current frame based on the computed difference ; and when re-constructing the current frame re-constructing the current frame using inter frame prediction based on the transformed reference frame. It is beneficial to transform the reference frame so that the projection center of the reference frame corresponds with the projection center of the current frame. Then it is possible to use the transformed reference frame in inter frame prediction of the video decoding method. This leads into improved and more efficient decoding.

In an implementation of the aspect the method further comprises inserting the reconstructed frame into a decoded picture buffer with a specified index. It is beneficial to store the reconstructed frames in a decoded picture buffer with a specified index so that the reconstructed frame can later be used as reference frame and is easy to address.

In an implementation of the aspect the method further comprises: selecting at least one reference frame based on a reference frame index included in the encoded panoramic video. It is beneficial to choose the reference frame so that the most suitable reference frame may be used in decoding.

In an implementation of the aspect the method further comprises: selecting a portion of the reference frame; and re-constructing the current frame using the selected portion and the computed difference. It is beneficial to select only a part of the reference frame as only it may not be necessary to decode and compensate motion in the complete frame but only in the part where the need occurs. This saves computing power as only a part of the frame needs to be processed. Furthermore, selecting only a part of a reference frame is particularly beneficial when it is possible to select the part from several different reference frames that have been selected from a set of reference frames.

In an implementation of the aspect the method further comprises: performing projection of the reference frame so that the projection center of the reference frame corresponds with the projection center of the current frame when transforming the reference frame to correspond with the projection center of the current frame. This is particularly beneficial as it provides the compensation for changes in camera location and other similar motion, such as zooming.

In an implementation of the aspect the method further comprises rotating the reference frame around its projection center in order to transform the reference frame so that the rotated reference frame corresponds with the current frame. This is beneficial as it provides the compensation for camera rotations, such as yaw, pitch and roll. Furthermore, it is possible and particularly beneficial to combine the rotational correction with shifting correction when both occur at the same time.

In an implementation of the aspect the video includes at least one of the following: vector projection shift in three-dimensional space and orientation parameters (e.g., three orientiation angles). It is beneficial to provide the parameters in the video for supporting the motion compensation in panoramic video.

In an implementation of the aspect the method further comprises generating an additional reference frame. It is beneficial to generate additional reference frames as the higher number of reference frames may improve the decoding result.

In an implementation of the aspect the method further comprises compensating the movements using a global motion compensation method. It is beneficial to use the global motion compensation approach with the aspect as it is a generally known and widely used approach. Thus, the implementation is able to improve the inter frame prediction in already existing systems involving at least one decoder with small changes.

In an implementation of the aspect the method further comprises the use of one of the following: transformation using the projection center of the current frame as focal point; transformation using the projection center of the reference frame as a focal point; or transformation using a position between the projection centers of the reference frame and current frame as a focal point.

. It is beneficial to allow use of different projection centers or positions as a focal point as it increases the flexibility of the approach.

In an aspect the method described above is implemented as a computer program comprising computer program code that causes the method when the computer program is executed on a computing device. It is particularly beneficial to implement the method as a computer program as it can easily be executed in different computing devices.

The aspects and implementations disclosed above are beneficial in general as they improve the video decoding efficiency and quality. This provides better use of capacity of existing devices and the user experience can be improved.

DESCRIPTION OF THE DRAWINGS

The present description will be better understood from the following detailed description read in light of the accompanying drawings, wherein:

FIG. 1 illustrates an example of a video coding apparatus for compensating motion in a panoramic video;
FIG. 2 illustrates an example of a method for compensating motion in a panoramic video;

FIG. 3 illustrates an example of a shift in a spherical image; and
FIG. 4 illustrates an example of video coding system;

DETAILED DESCRIPTION

The detailed description, provided below in connection with the appended drawings, is intended as a description of the embodiments and is not intended to represent the only forms in which the embodiment may be constructed or utilized. However, the same or equivalent functions and structures may be accomplished by different embodiments. In the following description decoding is discussed, however, a corresponding encoder includes a similar decoder part.

In the following description a video coding apparatus, a method and a corresponding computer program are disclosed. The description relates to the decoding of a panoramic video. The panoramic video may be, for example of 180 or 360 degrees, and stored into a video stream or other similar encoded sequence of images in form of image frames of any projection. The decoded image frames are then mapped to a surface of a sphere forming the panoramic view. Thus, each of the mapped image frames has a projection center, which can also be determined when the image frame is stored as a two-dimensional image frame in the video stream. In the following description the term "projection center" means the center of a sphere in three-dimensional (3D) space on which the panoramic video is projected.

In the following example, the global motion compensation approach is used as the motion correction method, however, the disclosed method may be used also in connection with other similar approaches. For the purposes of the panoramic video, the known approach is modified in accordance with the principles of the following description.

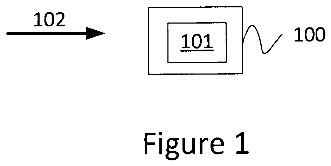

Figure 1 illustrates an example of a video decoding apparatus 100. The video decoding apparatus is configured to compensate motion in a panoramic video. The video coding apparatus comprises at least one processor 101 that is configured to compensate the motion according to the principles described in below. The compensating is done for a video stream or similar encoded sequence of images which the processor is configured to receive 102. The receiving may be done using several different commonly known means, such as receiving from a bus, internal or external memory, network connection or similar. Furthermore, after receiving the panoramic video, the processor is configured to extract image frames from the received panoramic video. The extracted image frames are then processed before it is shown to a viewer.

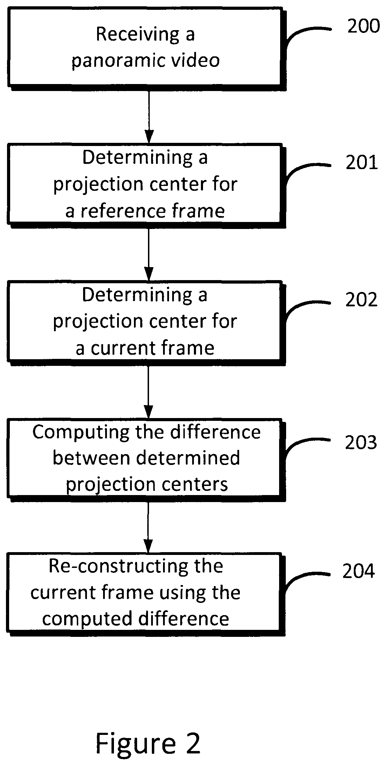

Figure 2 illustrates an example method which may be performed by a video decoding apparatus such as the video decoding apparatus 100 of figure 1. Although, in the following example, the method is described as a sequential process, some of the steps may and probably will be executed in parallel, as the decoding of a video is continuous. In the example, a panoramic video comprising a plurality of encoded image frames is received in step 200. The receiving may be done using any suitable receiving means or by retrieving from a memory. The video decoding apparatus receiving the image frames may, for example, include or be connectable to a device capable of displaying such video. As mentioned above, the panoramic video is extracted into image frames, using inter frame prediction. The image frames can later be shown to a viewer frame by frame. Later in this description, when a plurality of image frames is referred to, image frames extracted from the received panoramic video are meant.

The plurality of image frames includes reference frames. One or more of such reference frames are chosen for constructing the current frame. For each of the chosen one or more reference frames, a respective projection center is determined, step 201. Then, a projection center (in 3D space) for the current frame is determined, step 202.

The projection centers are determined in the same coordinate system. It is possible that this coordinate system is either the coordinate system of the reference frame, the coordinate system of the current frame, or any other coordinate system that is considered appropriate for coding that particular video.

When the projection centers have been determined in the same coordinate system, it is possible to compute the difference between these projection centers, step 203. Then the computed difference may be used in re-constructing the current frame, step 204.

In figure 2 an example of a method of motion compensation for panoramic video has been described. In the following some of the more detailed examples are discussed.

The difference computed in step 203 may be used in several ways. For example, the reference frame may be transformed based on the computed difference so that the projection center of the transformed reference frame coincides with the projection center of the current frame. Herein, "coincides" encompasses "approximately coincides" in the sense that the projection center of the transformed reference frame is located closer to the projection center of the curernt frame when compared to the original, non-transformed reference frame. Ideally, the projection center of the transformed reference frame should coincide perfectly with the projection center of the current frame. However, in practice there may be a tolerable mismatch between the two projection centers that can be due to several reaons, in particular the complex nature of motion and computational approximations. The current frame can then be reconstructed using inter frame prediction and at least one transformed reference frame. It should be understood that when more than one reference frame is used in the prediction process, some of the reference frames may be transformed reference frames but it is not necessary that all of them are transformed. Thus, the prediction may be based on transformed and non-transformed reference frames. The reference frames may be selected from the available reference frames by using, for example, a specific index that is included in the encoded panoramic video.

As described above, more than one reference frame may be used. Correspondingly only a part of each of the reference frames may be used. This also applies to the case of only one reference frame. The part of the frame may be called a block or unit, possibly with more specific name, such as coding block or prediction unit. Typically the naming is determined in video decoding (and respective coding) standards, however, the technique disclosed herein is not limited to a particular standard.

In the above, a transformation of the reference frame with regard to a projection center has been described.. The transformation may be performed to compensate for, e.g., a change of camera location or zooming, which would both require shifting the geometrical location of the projection center. This can be achieved by transforming the reference frame so that the projection center of the transformed reference frame corresponds with with the projection center of the current frame. Alternatively or in addition thereto, there may be rotational motion (e.g., due to changes in the orientation of the camera). Such rotational motion can be compensated by a corresponding rotation of the reference frame so that the rotated reference frame matches the current frame to a best possible degree. The above mentioned examples of motion can occur separately or simultaneously and in both cases a correspondig transformation of the reference frame can be made to compensate for the associated geometrical changes in the content of subsequent image frames.

When encoding the video, the transformation parameters (e.g., the 3D shift vector and three orientation angles) can be calculated, for example, on the basis of side information gathered while recording the video. For example, the side information may include measured values indicative of motion of the camera and the transformation parameters can be calculated based on the measured motion values. Translation and rotation of the camera can be measured, for example, using a positioning system or an accelerometer, or both.

In the following, an enhanced motion correction approach is explained in detail. In the approach, an initial spherical image is transformed into a new spherical image for which the projection center (i.e. the center of the viewing sphere or point of view in 3D space) has changed. Thus, the scene depicted by the new spherical image is seen from a different point of view. The following description details the mathematical transformation of a pixel of the initial image (captured by its position in the spherical image) into a pixel in the transformed image.

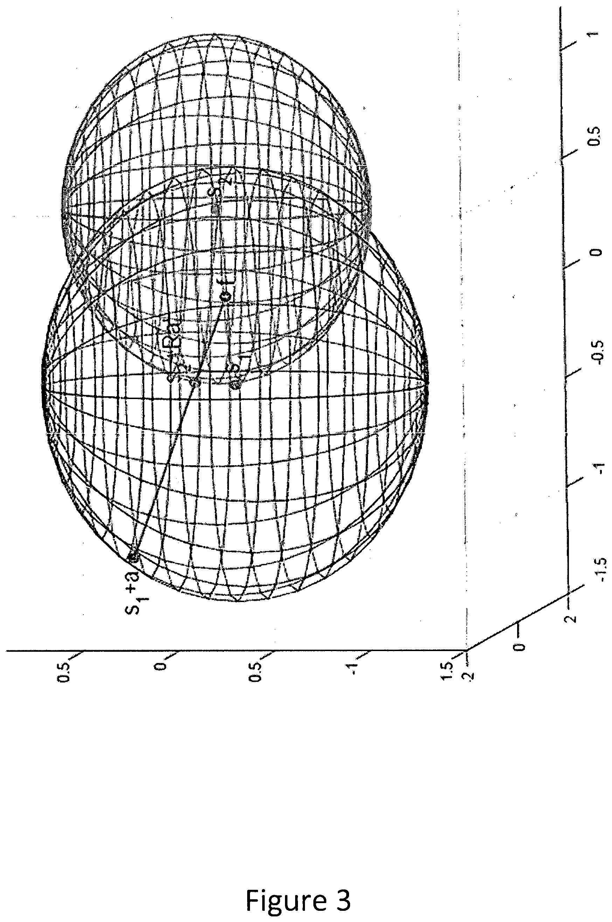

In figure 3, an illustration of a spherical image and the shift is shown. A three-dimensional sphere centered at $s_1$ represents the initial spherical image. Let us denote by $s_2$ the shifted center of the transformed spherical image and by R the scaling factor of the radius, i.e. the shifted sphere has a radius R, assuming a radius equal to 1 for the initial sphere. In the following, f represents the focal point of both images, so that any considered ray of light goes through f. Without loss of generality, the f can be considered to represent the origin of the Cartesian coordinate system, i.e.

$$f = (0,0,0)^T.$$

Let us denote by $a = (ax, ay, az)^T$ the local coordinates of a pixel at the surface of the initial sphere that is centered at coordinate $s_1$. We denote by $a' = (ax', ay', az')^T$ the local coordinates of the transformed pixel at the surface of the normalized version of the shifted sphere that is centered at coordinate $s_2$.

Then, $s_2 + Ra'$ results in the intersection of the ray of light going through $s_1 + a$ and focal point f. Therefore, after some calculus, point, a' satisfies the following equation

$$T(a) = a' = \frac{\rho}{R}(s_1 + a) - \frac{1}{R}s_2$$

$$\text{with } \rho = \frac{s_2^T(s_1+a) + \sqrt{(s_2^T(s_1+a))^2 - \|s_1+a\|^2(\|s_2\|^2 - R^2)}}{\|s_1+a\|^2}.$$

One can recover the initial image from the transformed spherical image through the following backward mapping:

$$T^{-1}(a') = a = \rho'(s_2 + Ra') - s_1$$

$$\text{with } \rho' = \frac{s_1^T(s_2+Ra) + \sqrt{(s_1^T(s_2+Ra'))^2 - \|s_2+Ra'\|^2(\|s_1\|^2 - 1)}}{\|s_2+Ra'\|^2}.$$

Note that, if $f = s_2$, the forward transformation simplifies into:

$$a' = \frac{s_1 + a}{\|s_1 + a\|}.$$

Furthermore, if $f = \frac{s_1 + s_2}{2}$ and R=1, the transformations are symmetrical, that is to say

$$T^{-1}(a) = -T(-a).$$

It is also possible to use the backward transformation when f = $s_1$, i.e. the projection center of the current frame is used as focal point. This may be convenient in some applications.

The following parameters should be signaled with the video in order to support GMC of 360 degree panoramic video: The deplacement vector for the center of the viewing sphere (geometrical center of 360 degree projection) in 3D space, and three orientation angles (also known as Euler angles or yaw, pitch and roll) (or parameters equivalent to the deplacement vector and the three orientation angles). The deplacement vector can be expressed, for example, in 3D Cartesian coordinates or in spherical coordinates or in any other coordinate system.

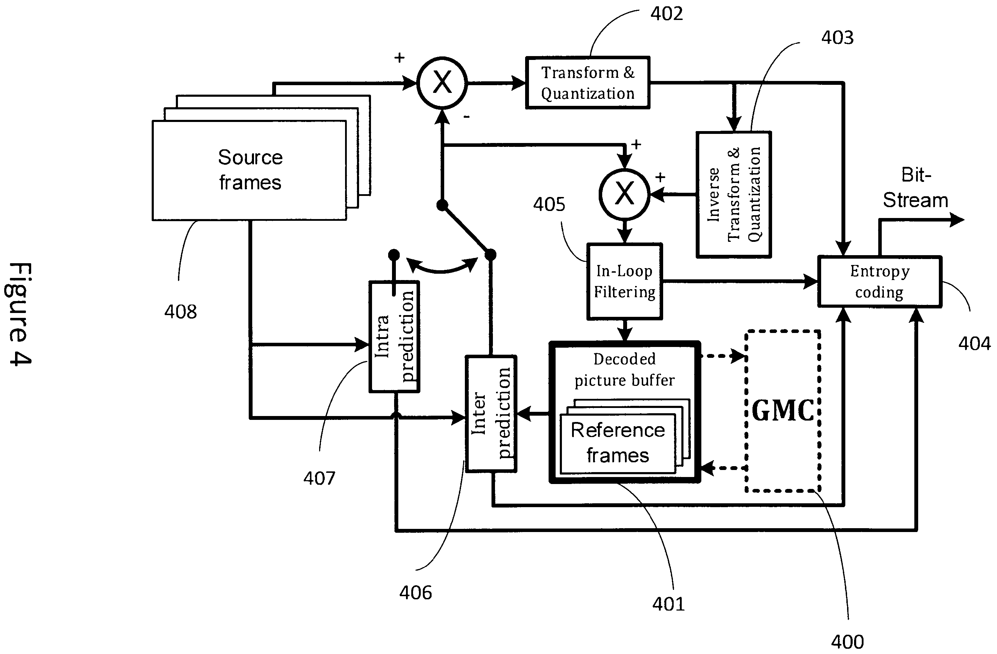

In figure 4 an illustration of a video coding system using the global motion compensation approach is shown. The motion compensation, as described above, requires modifications to the global motion compensation unit 400 and to the decoded picture buffer 401. When processing the sequence of images as described above, new reference frames are stored in the decoded picture buffer 400 for later use. The stored reference frames are indexed accordingly so that they can be referred to when needed.

In an alternative example, the transformed reference frames are not stored for later. However, a corresponding index may be reserved. In such implementation, when a reference image according to the index is requested, the transformed reference image is generated on demand. This approach may be preferred if the memory space in the device is limited.

As described earlier, the stored or on-demand generated transformed reference images do not necessarily need to be used as a whole but only the needed parts can be retrieved from the decoded picture buffer or be generated on demand. This could be done on frame unit level (block level): during decoding of the current frame unit and, depending on the reference index used for inter-prediction of this unit, the GMC is applied only for the reference frame area, which corresponded to this reference index and motion vector shift.

Figure 4 further includes common components of a video coding system, such as source frames 408 and entities, for example, for quantization 402, 403, entropy coding 404 and filtering 405. Furthermore, video decoding system commonly comprises inter frame 406 and intra frame 407 prediction . These relate to common video decoding and are illustrated only for explanatory purposes so that the location of the motion compensation approach described above can be understood. The motion compensation approach may be used also in other video decoding systems. Although the figure schematically shows source frames 408 are shown, it is understood and as explained before, the source frames arrive in an encoded form so that the encoded form only includes information for constructing the source frames that are later processed into the form the final frames that are shown to viewers. As explained above, the arrangement for compensating motion in a panoramic video may be implemented in hardware, in software, in a combination of hardware and software, or as a method. Notably, the video coding apparatus 100 described above may be implementad by a combination of hardware and software. The method may be implemented as a computer program. The computer program can be stored in a memory and be executed by a processing unit in a computing device. The processing unit may comprise one or more processors.

The video coding apparatus and method for providing a routing configuration has been described in conjunction with various embodiments herein. A single processor or other unit may fulfill the functions of several items recited in the claims. A computer program may be stored/distributed on a suitable medium, such as an optical storage medium or a solid-state medium supplied together with or as part of other hardware, but may also be distributed in other forms, such as via the Internet or other wired or wireless telecommunication systems.

## Claims

1. A video decoding apparatus (100) comprising a processor (101), which processor is configured to:

   - receive (200) an encoded panoramic video representing a sequence of frames of a panoramic video;

     determine (201) a projection center for a reference frame of the panoramic video;
     determine (202) a projection center for a current frame of the panoramic video, wherein the determined projection centers are determined in a same coordinate system;
compute (203) a difference between the determined projection centers of the reference frame and the current frame; and
re-construct (204) the current frame using inter frame prediction using the computed difference;

wherein a projection center is the center of a sphere in three-dimensional, 3D, space on which the panoramic video is projected; and
wherein the processor is further configured to:

transform the reference frame so that the projection center of the transformed reference frame corresponds with the projection center of the current frame based on the computed difference; and
when re-constructing the current frame the processor is further configured to re-construct the current frame using inter frame prediction based on the transformed reference frame.

2. The video decoding apparatus (100) according to claim 1, wherein the processor (101) is further configured to insert the reconstructed frame into a decoded picture buffer with a specified index.

3. The video decoding apparatus (100) according to any of preceding claims 1 - 2, wherein the processor (101) is further configured to select at least one reference frame based on a reference frame index included in the encoded panoramic video.

4. The video decoding apparatus (100) according to any preceding claims 1 - 3, wherein the processor (101) is further configured to select a part of the reference frame and to re-construct (204) the current frame using the selected part and the computed difference.

5. The video decoding apparatus (100) according to any of preceding claims 1 - 4, wherein the processor (101) is further configured to rotate the reference frame around its projection center in order to transform the reference frame so that the rotated reference frame corresponds with the current frame.

6. The video decoding apparatus (100) according to claim 1 - 5, wherein the processor (101) is further configured to generate an additional reference frame.

7. The video decoding apparatus (100) according to any of preceding claims 1 - 6, wherein the processor (101) is configured to compensate the movements using a global motion compensation method.

8. The video decoding apparatus (100) according to any of the preceding claims 1 - 7, wherein the processor (101) is further configured to use one of the following:

- transformation using the projection center of the current frame as focal point;
- transformation using the projection center of the reference frame as a focal point; or
- transformation using a position between the projection centers of the reference frame and current frame as a focal point.

9. A method for decoding a video, the method comprising:

receiving (200) an encoded panoramic video representing a sequence of frames of a panoramic video;
determining (201) a projection center for a reference frame of the panoramic video;
determining (202) a projection center for a current frame of the panoramic video, wherein the determined projection centers are determined in a same coordinate system;
computing (203) the difference between determined projection centers of the reference frame and the current frame; and
re-constructing (204) the current frame using inter frame prediction using the computed difference;
wherein a projection center is the center of a sphere in three-dimensional, 3D, space on which the panoramic video is projected; and
wherein the method further comprises:

transforming the reference frame so that the projection center of the transformed reference frame corresponds with the projection center of the current frame based on the computed difference; and

when re-constructing (204) the current frame re-constructing the current frame using inter frame prediction based on the transformed reference frame.

10. The method according to claim 9, wherein the method further comprises:
inserting the reconstructed frame into a decoded picture buffer with a specified index.

11. The method according to any of preceding claims 9 - 10 the method further comprising:
selecting at least one reference frame based on a reference frame index included in the encoded panoramic video..

12. The method according to any of preceding claims 9 - 11 the method further comprising:

selecting a part of the reference frame; and
re-constructing (204) the current frame using the selected part and the computed difference.

13. The method according to any of preceding claims 9 - 12 the method further comprising:
rotating the reference frame around its projection center in order to transform the reference frame so that the rotated reference frame to corresponds with the current frame.

14. A computer program comprising a program code configured to perform a method according to any one of claims 9 - 13, when the computer program is executed on a computing device.


**Patentansprüche**

1. Videodecodierungsvorrichtung (100), umfassend einen Prozessor (101), der konfiguriert ist, um:

ein codiertes Panoramavideo, das eine Sequenz von Einzelbildern eines Panoramavideos darstellt, zu empfangen (200);
einen Projektionsmittelpunkt für ein Bezugseinzelbild des Panoramavideos zu bestimmen (201);
einen Projektionsmittelpunkt für ein aktuelles Einzelbild des Panoramavideos zu bestimmen (202), wobei die bestimmten Projektionsmittelpunkte in einem gleichen Koordinatensystem bestimmt werden;
eine Differenz zwischen den bestimmten Projektionsmittelpunkten des Bezugseinzelbildes und des aktuellen Einzelbildes zu berechnen (203); und
das aktuelle Einzelbild unter Verwendung einer Interframe-Vorhersage unter Verwendung der berechneten Differenz zu rekonstruieren (204);
wobei ein Projektionsmittelpunkt der Mittelpunkt eines Bereichs im dreidimensionalen (3D) Raum ist, auf den das Panoramavideo projiziert wird; und
wobei der Prozessor ferner konfiguriert ist, um:

das Bezugseinzelbild so zu transformieren, dass der Projektionsmittelpunkt des transformierten Bezugseinzelbildes dem Projektionsmittelpunkt des aktuellen Einzelbildes basierend auf der berechneten Differenz entspricht; und
bei dem Rekonstruieren des aktuellen Einzelbildes den Prozessor ferner zu konfigurieren, um das aktuelle Einzelbild unter Verwendung einer Interframe-Vorhersage basierend auf dem transformierten Bezugseinzelbild zu rekonstruieren.

2. Videodecodierungsvorrichtung (100) nach Anspruch 1, wobei der Prozessor (101) ferner konfiguriert ist, um das rekonstruierte Einzelbild in einen decodierten Bildpuffer mit einem bestimmten Index einzufügen.

3. Videodecodierungsvorrichtung (100) nach einem der vorhergehenden Ansprüche 1-2, wobei der Prozessor (101) ferner konfiguriert ist, um mindestens ein Bezugseinzelbild basierend auf einem in dem codierten Panoramavideo beinhalteten Bezugseinzelbildindex auszuwählen.

4. Videodecodierungsvorrichtung (100) nach einem der vorhergehenden Ansprüche 1-3, wobei der Prozessor (101) ferner konfiguriert ist, um einen Teil des Bezugseinzelbildes auszuwählen und das aktuelle Einzelbild unter Verwendung des ausgewählten Teils und der berechneten Differenz zu rekonstruieren (204).

5. Videodecodierungsvorrichtung (100) nach einem der vorhergehenden Ansprüche 1-4, wobei der Prozessor (101) ferner konfiguriert ist, um das Bezugseinzelbild um seinen Projektionsmittelpunkt zu drehen, um das Bezugseinzelbild so zu transformieren, dass das gedrehte Bezugseinzelbild dem aktuellen Einzelbild entspricht.

6. Videodecodierungsvorrichtung (100) nach Anspruch 1-5, wobei der Prozessor (101) ferner konfiguriert ist, um ein zusätzliches Bezugseinzelbild zu erzeugen.

7. Videodecodierungsvorrichtung (100) nach einem der vorhergehenden Ansprüche 1-6, wobei der Prozessor (101) konfiguriert ist, um die Bewegungen unter Verwendung eines globalen Bewegungskompensationsverfahrens zu kompensieren.

8. Videodecodierungsvorrichtung (100) nach einem der vorhergehenden Ansprüche 1-7, wobei der Prozessor (101) ferner konfiguriert ist, um eines der folgenden Elemente zu verwenden:

   Transformation unter Verwendung des Projektionsmittelpunkts des aktuellen Einzelbildes als Brennpunkt;
   Transformation unter Verwendung des Projektionsmittelpunkts des Bezugseinzelbildes als ein Brennpunkt; oder
   Transformation unter Verwendung einer Position zwischen den Projektionsmittelpunkten des Bezugseinzelbildes und des aktuellen Einzelbildes als ein Brennpunkt.

9. Verfahren zum Decodieren eines Videos, das Verfahren umfassend:

   Empfangen (200) eines codierten Panoramavideo, das eine Sequenz von Einzelbildern eines Panoramavideos darstellt;
   Bestimmen (201) eines Projektionsmittelpunkts für ein Bezugseinzelbild des Panoramavideos;
   Bestimmen (202) eines Projektionsmittelpunkts für ein aktuelles Einzelbild des Panoramavideos, wobei die bestimmten Projektionsmittelpunkte in einem gleichen Koordinatensystem bestimmt werden;
   Berechnen (203) der Differenz zwischen bestimmten Projektionsmittelpunkten des Bezugseinzelbildes und des aktuellen Einzelbildes; und
   Rekonstruieren (204) des aktuellen Einzelbildes unter Verwendung einer Interframe-Vorhersage unter Verwendung der berechneten Differenz;
   wobei ein Projektionsmittelpunkt der Mittelpunkt eines Bereichs im dreidimensionalen (3D) Raum ist, auf den das Panoramavideo projiziert wird; und
   wobei das Verfahren ferner Folgendes umfasst:

   Transformieren des Bezugseinzelbildes, so dass der Projektionsmittelpunkt des transformierten Bezugseinzelbildes dem Projektionsmittelpunkt des aktuellen Einzelbildes basierend auf der berechneten Differenz entspricht; und
   bei dem Rekonstruieren (204) des aktuellen Einzelbildes, Rekonstruieren des aktuellen Einzelbildes unter Verwendung der Interframe-Vorhersage basierend auf dem transformierten Bezugseinzelbild.

10. Verfahren nach Anspruch 9, wobei das Verfahren ferner Folgendes umfasst:
    Einfügen des rekonstruierten Einzelbildes in einen dekodierten Bildpuffer mit einem bestimmten Index.

11. Verfahren nach einem der vorhergehenden Ansprüche 9-10, wobei das Verfahren ferner Folgendes umfasst:
    Auswählen mindestens eines Bezugseinzelbildes basierend auf einem in dem codierten Panoramavideo beinhalteten Bezugseinzelbildindexes.

12. Verfahren nach einem der vorhergehenden Ansprüche 9-11, wobei das Verfahren ferner Folgendes umfasst:

    Auswählen eines Teils des Bezugseinzelbildes; und
    Rekonstruieren (204) des aktuellen Einzelbildes unter Verwendung des ausgewählten Teils und der berechneten Differenz.

13. Verfahren nach einem der Ansprüche 9-12, wobei das Verfahren ferner Folgendes umfasst:
    Drehen des Bezugseinzelbildes um seinen Projektionsmittelpunkt, um das Bezugseinzelbild so zu transformieren, dass das gedrehte Bezugseinzelbild dem aktuellen Bezugseinzelbild entspricht.

14. Computerprogramm, umfassend einen Programmcode, der konfiguriert ist, um ein Verfahren nach einem der Ansprüche 9-13 durchzuführen, wenn das Computerprogramm auf einer Rechnervorrichtung ausgeführt wird.

**Revendications**

1. Appareil de décodage vidéo (100) comprenant un processeur (101), lequel processeur est configuré pour :

   - recevoir (200) une vidéo panoramique encodée représentant une séquence d'images d'une vidéo panoramique ;

   déterminer (201) un centre de projection pour une image de référence de la vidéo panoramique ;
   déterminer (202) un centre de projection pour une image actuelle de la vidéo panoramique, dans lequel les centres de projection déterminés sont déterminés dans un même système de coordonnées ;
   calculer (203) une différence entre les centres de projection déterminés de l'image de référence et de l'image actuelle ; et
   reconstruire (204) l'image actuelle à l'aide de la prédiction inter-image à l'aide de la différence calculée ;
   dans lequel un centre de projection est le centre d'une sphère dans l'espace tridimensionnel, 3D, sur lequel la vidéo panoramique est projetée ; et
   dans lequel le processeur est également configuré pour :

   transformer l'image de référence de sorte que le centre de projection de l'image de référence transformée corresponde au centre de projection de l'image actuelle sur la base de la différence calculée ; et
   lors de la reconstruction de l'image actuelle, le processeur est également configuré pour reconstruire l'image actuelle à l'aide d'une prédiction inter-image sur la base de l'image de référence transformée.

2. Appareil de décodage vidéo (100) selon la revendication 1, dans lequel le processeur (101) est également configuré pour insérer l'image reconstruite dans une mémoire tampon d'image décodée avec un index spécifié.

3. Appareil de décodage vidéo (100) selon l'une quelconque des revendications précédentes 1 et 2, dans lequel le processeur (101) est également configuré pour sélectionner au moins une image de référence sur la base d'un index d'image de référence inclus dans la vidéo panoramique encodée.

4. Appareil de décodage vidéo (100) selon l'une quelconque des revendications précédentes 1 à 3, dans lequel le processeur (101) est également configuré pour sélectionner une partie de l'image de référence et pour reconstruire (204) l'image actuelle à l'aide de la partie sélectionnée et la différence calculée.

5. Appareil de décodage vidéo (100) selon l'une quelconque des revendications précédentes 1 à 4, dans lequel le processeur (101) est également configuré pour faire pivoter l'image de référence autour de son centre de projection afin de transformer l'image de référence de sorte que l'image de référence pivotée corresponde à l'image actuelle.

6. Appareil de décodage vidéo (100) selon la revendication 1 à 5, dans lequel le processeur (101) est également configuré pour générer une image de référence supplémentaire.

7. Appareil de décodage vidéo (100) selon l'une quelconque des revendications précédentes 1 à 6, dans lequel le processeur (101) est configuré pour compenser les mouvements à l'aide d'un procédé de compensation de mouvement globale.

8. Appareil de décodage vidéo (100) selon l'une quelconque des revendications précédentes 1 à 7, dans lequel le processeur (101) est également configuré pour utiliser l'un des éléments suivants :

   - la transformation à l'aide du centre de projection de l'image actuelle comme point focal ;
   - la transformation à l'aide du centre de projection de l'image de référence comme point focal ; ou
   - la transformation à l'aide d'une position entre les centres de projection de l'image de référence et de l'image actuelle comme point focal.

9. Procédé de décodage d'une vidéo, le procédé comprenant :

   la réception (200) d'une vidéo panoramique encodée représentant une séquence d'images d'une vidéo panoramique ;
   la détermination (201) d'un centre de projection pour une image de référence de la vidéo panoramique ;
   la détermination (202) d'un centre de projection pour une image actuelle de la vidéo panoramique, dans lequel les centres de projection déterminés sont déterminés dans un même système de coordonnées ;

le calcul (203) de la différence entre des centres de projection déterminés de l'image de référence et de l'image actuelle ; et

la reconstruction (204) de l'image actuelle à l'aide de la prédiction inter-image à l'aide de la différence calculée ;

dans lequel un centre de projection est le centre d'une sphère dans l'espace tridimensionnel, 3D, sur lequel la vidéo panoramique est projetée ; et

dans lequel le procédé comprend également :

la transformation de l'image de référence de sorte que le centre de projection de l'image de référence transformée corresponde au centre de projection de l'image actuelle sur la base de la différence calculée ; et

lors de la reconstruction (204) de l'image actuelle la reconstruction de l'image actuelle à l'aide d'une prédiction inter-image sur la base de l'image de référence transformée.

10. Procédé selon la revendication 9, dans lequel le procédé comprend également :

l'insertion de l'image reconstruite dans une mémoire tampon d'image décodée avec un index spécifié.

11. Procédé selon l'une quelconque des revendications précédentes 9 et 10 le procédé comprenant également :

la sélection d'au moins une image de référence sur la base d'un index d'image de référence inclus dans la vidéo panoramique encodée.

12. Procédé selon l'une quelconque des revendications précédentes 9 à 11 le procédé comprenant également :

la sélection d'une partie de l'image de référence ; et

la reconstruction (204) de l'image actuelle à l'aide de la partie sélectionnée et de la différence calculée.

13. Procédé selon l'une quelconque des revendications précédentes 9 à 12 le procédé comprenant également :

la rotation de l'image de référence autour de son centre de projection afin de transformer l'image de référence de sorte que l'image de référence pivotée corresponde à l'image actuelle.

14. Programme informatique comprenant un code de programme configuré pour réaliser un procédé selon l'une quelconque des revendications 9 à 13, lorsque le programme informatique est exécuté sur un dispositif informatique.

**102** → [ [ **101** ] ] 〜 **100**

## Figure 1

| | |
|---|---|
| Receiving a panoramic video | 200 |

↓

| | |
|---|---|
| Determining a projection center for a reference frame | 201 |

↓

| | |
|---|---|
| Determining a projection center for a current frame | 202 |

↓

| | |
|---|---|
| Computing the difference between determined projection centers | 203 |

↓

| | |
|---|---|
| Re-constructing the current frame using the computed difference | 204 |

# Figure 2

Figure 3

Figure 4

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2016064862 A1

- US 2017118475 A1